(19)

Europäisches
Patentamt

European
Patent Office

Office européen
des brevets

(11)  **EP 4 586 547 A1**

(12) **EUROPEAN PATENT APPLICATION**

(43) Date of publication:
16.07.2025  Bulletin 2025/29

(21) Application number: 24151474.4

(22) Date of filing: 11.01.2024

(51) International Patent Classification (IPC):
*H04L 9/32* (2006.01)     *H04L 9/00* (2022.01)

(52) Cooperative Patent Classification (CPC):
**H04L 9/50; H04L 9/3239;** H04L 2209/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BSV Association**
**6300 Zug (CH)**

(72) Inventor: **OSKARSSON, Siggi**
**W1W 8AP (GB)**

(74) Representative: **Page White Farrer**
**Bedford House**
**21a John Street**
**London WC1N 2BF (GB)**

(54) **NODE ARCHITECTURE FOR HIGH VOLUME BLOCKCHAIN NETWORK**

(57)  Methods, systems, and data structures for processing large volumes of transactions in blockchain nodes. The system may include a propagation service to receive and propagate blockchain transactions over a blockchain network; a transaction validation service to receive transactions from the propagation service and to verify that received transactions are compliant with blockchain protocol rules; a block assembly service to create a block template for mining by the computing system, including creating one or more subtrees of validated transactions; one or more miners to search for a proof of work with regard to the block template; a validator service to receive and validate incoming subtrees from other blockchain nodes on the blockchain network and to, following receipt of a block solution, verify validity of the new block based on previously validated subtrees; and a blockchain service to manage block headers and lists of subtrees in a block.

**EP 4 586 547 A1**

Description

TECHNICAL FIELD

The present disclosure relates to blockchain networks and, in particular, to methods and devices for handling large volume transaction flow.

BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain is formed from a chain of blocks of data, wherein each block includes one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction includes one or more inputs and one or more outputs. Any spendable output includes an element specifying an amount of the digital asset that is derivable from the proceeding sequence of transactions. The spendable output is sometimes referred to as a UTXO ("unspent transaction output"). The output may further include a locking script specifying a condition for the future redemption of the output. A locking script is a predicate defining the conditions necessary to validate and transfer digital tokens or assets. Each input of a transaction (other than a coinbase transaction) includes a pointer (i.e. a reference) to such an output in a preceding transaction, and may further include an unlocking script for unlocking the locking script of the pointed-to output. Consider that a pair of transactions may be labelled a first and a second transaction (or "target" transaction). The first transaction includes at least one output specifying an amount of the digital asset, and having a locking script defining one or more conditions of unlocking the output. The second, target transaction has at least one input, including a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

As blockchain technology is applied to larger and larger numbers of transactions, managing the volume of transactions become challenging. For example, common credit card payment networks, such as Mastercard or Visa's payment networks, collectively typically process thousands of transactions per second. It may be advantageous to have solutions that would enable a blockchain network to manage similar levels of throughput.

## BRIEF DESCRIPTION OF THE DRAWINGS

Reference will now be made, by way of example, to the accompanying drawings which show example embodiments of the present application and in which:

FIG. 1 shows an example system for implementing a blockchain;

FIG. 2 illustrates an example transaction protocol;

FIG. 3A shows an example implementation of a client application;

FIG. 3B shows an example of a user interface for the client application;

FIG. 4 illustrates example node software for a blockchain node;

FIG. 5 diagrammatically shows a simplified example blockchain node for processing a large volume of blockchain transactions;

FIG. 6A shows an overall view of an example architecture of a blockchain node made up of different microservices and showing their interactions;

FIGs. 6B to 6E show enlargements of portions of FIG. 6A for improved readability;

FIG. 7 shows an example sequence diagram that reflects some of the operations of an example blockchain node;

FIG. 8 diagrammatically illustrates example elements of a transaction propagation service;

FIG. 9 diagrammatically illustrates example elements of a transaction validation service;

FIG. 10 diagrammatically illustrates example elements of a block assembly service;

FIG. 11 diagrammatically illustrates example elements of a validator service;

FIG. 12 diagrammatically illustrates example elements of a blockchain service; and

FIG. 13 diagrammatically illustrates example elements of a peer-to-peer (P2P) legacy service.

Like reference numerals are used in the drawings to denote like elements and features.

## DETAILED DESCRIPTION OF EXAMPLES

In one aspect, there may be provided a computing system for processing blockchain transactions. The system may include one or more processing units; and memory storing processor executable instructions. When executed by the one or more processing units, the instruction are to cause the one or more processing units to implement a propagation service to receive and propagate blockchain transactions over a blockchain network; a transaction validation service to receive transactions from the propagation service and to verify that received transactions are compliant with blockchain protocol rules; a block assembly service to create a block template for mining by the computing system, including creating one or more subtrees of validated transactions; one or more miners to search for a proof of work with regard to the block template; a validator service to receive and validate incoming subtrees from other blockchain nodes on the blockchain network and to, following receipt of a block solution, verify validity of the new block based on previously validated subtrees; and a blockchain service to manage block headers and lists of subtrees in a block.

In some implementations, the system includes on or more data storage devices and the instructions, when executed by the one or more processing units, further cause the one or more processing units to implement an asset service to act as an interface between microservices and data elements stored in the data storage devices.

In some implementations, the instructions, when executed by the one or more processing units, further cause the one or more processing units to implement a coinbase service to monitor the blockchain for new coinbase transactions, to record them, and to track their maturity.

In some implementations, the system includes a data storage device, and the instructions, when executed by the one or more processing units, further cause the one or more processing units to implement a UTXO store using the data storage device, wherein the UTXO store is to track unspent transaction outputs and to respond to requests for unspent transaction output information from the transaction validation service and/or the validator service.

In some implementations, the system includes a data storage device and the instructions, when executed by the one or more processing units, further cause the one or more processing units to implement a transaction meta store using the data storage device, wherein transaction meta store is to store transaction data together with transaction metadata that includes at least a list of hashes of a transactions parent transactions.

In some implementations, the instructions, when executed by the one or more processing units, further cause the one or more processing units to implement a ban list service, wherein the ban list service is to track node identifiers of nodes banned from operating on the blockchain network due to a violation of a network protocol rule.

In another aspect, the present application describes a method of processing blockchain transactions by a node. The method may include sending and receiving blockchain transactions using a multicast broadcast service over a blockchain network; validating received blockchain transactions based on blockchain network protocol rules; assembling one or more subtrees from validated transactions and, as they are assembled, adding the one or more subtrees to a block template for mining by one or more mining units, and transmitting the one or more subtrees to other nodes on the blockchain network; while mining is ongoing, receiving external subtrees from the other nodes on the blockchain network and validating and storing the external subtrees; and receiving a block solution from one of the other nodes and validating, using validated external subtrees, the block solution and, once validated, appending a solved block to the blockchain.

In another aspect, there may be provided a computing device implementing a node on a blockchain network. The computing device may include memory, one or more processors, and computer-executable instructions that, when executed, cause the processors to carry out one or more of the methods described herein.

In yet another aspect, there may be provided a computer-readable medium storing processor-executable instructions, the processor-executable instructions including instructions that, when executed by one or more processors, cause the processors to carry out at least one of the methods described herein.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of... or..." is intended to cover any one or more of the listed elements, including any one of the listed elements alone, any sub-combination, or all of the elements, without necessarily excluding any additional elements, and without necessarily requiring all of the elements.

### *Example System Overview*

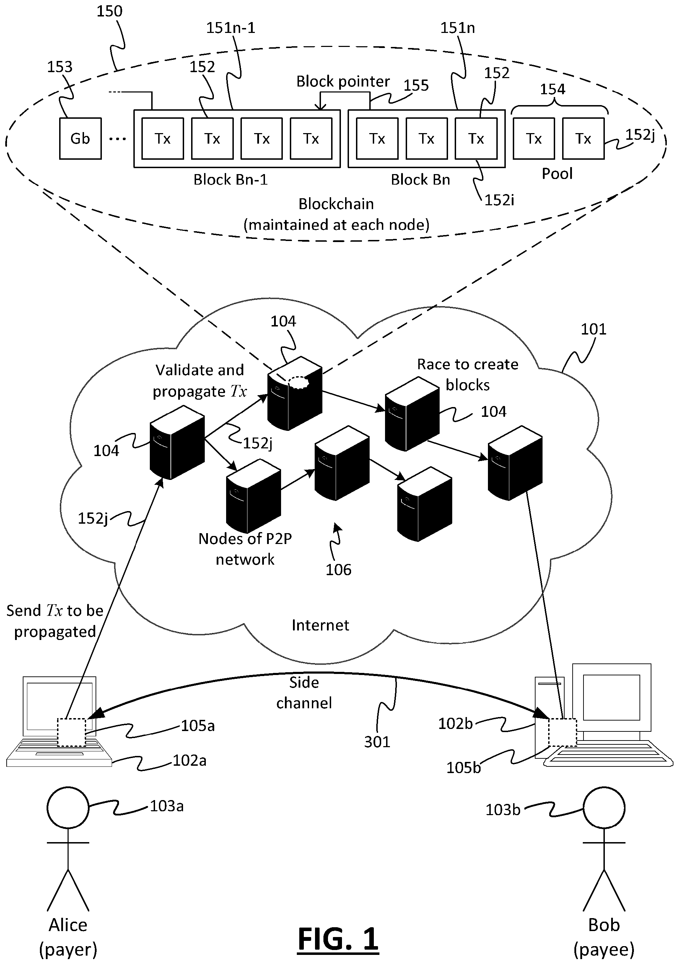

Figure 1 shows an example system 100 for implementing a blockchain 150. The system 100 may include a packet-switched network 101, typically a wide-area internetwork such as the Internet. The packet-switched network 101 includes a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 includes computer equipment of a peer, with different ones of the nodes 104 belonging to different peers. Each blockchain node 104 includes a processing apparatus implemented by one or more processors, e.g. one or more central processing units (CPUs), accelerator processors, application specific processors and/or field programmable gate arrays (FPGAs), and other equipment such as Application Specific Integrated Circuits (ASICs). Each node also includes memory, i.e. computer-readable storage in the form of a non-transitory computer-readable medium or media. The memory may include one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 includes a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain includes one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 has at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also includes a block pointer 155 pointing back to the previously created block 151 in the chain so as to define a sequential order to the blocks 151. Each transaction 152 (other than a coinbase transaction) has a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory.

In a given present transaction 152j, the (or each) input includes a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also includes the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may include checking that the cryptographic signature or other authorisation of the entity 103 included in the input of the new transaction 152j matches a condition defined in the output of the preceding transaction 152i which the new transaction assigns, wherein this condition typically includes at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this includes searching for a "nonce" value such that when the nonce is concatenated with a representation of the ordered set of transactions 154 and hashed, then the output of the hash meets a predetermined condition. For example, the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly-defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server that includes one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus including one or more processors, e.g. one or more CPUs, GPUs, other accelerator processors, application specific processors, and/or FPGAs. The computer equipment 102 of each party 103 further includes memory, i.e. computer-readable storage in the form of a non-transitory computer-readable medium or media. This memory may include one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software such as a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 includes at least one user terminal, e.g. a desktop or laptop computer, a tablet, a smartphone, or a wearable device such as a smartwatch. The computer equipment 102 of a given party 103 may also include one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 includes at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality includes collating the amounts defined in the outputs of the various 152 transactions scattered throughout the blockchain 150 that belong to the party in question.

It will be understood that whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This may include first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions 154, but whoever gets there first will define the ordered set of transactions that are included in the latest block 151, and eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 includes a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-based Model

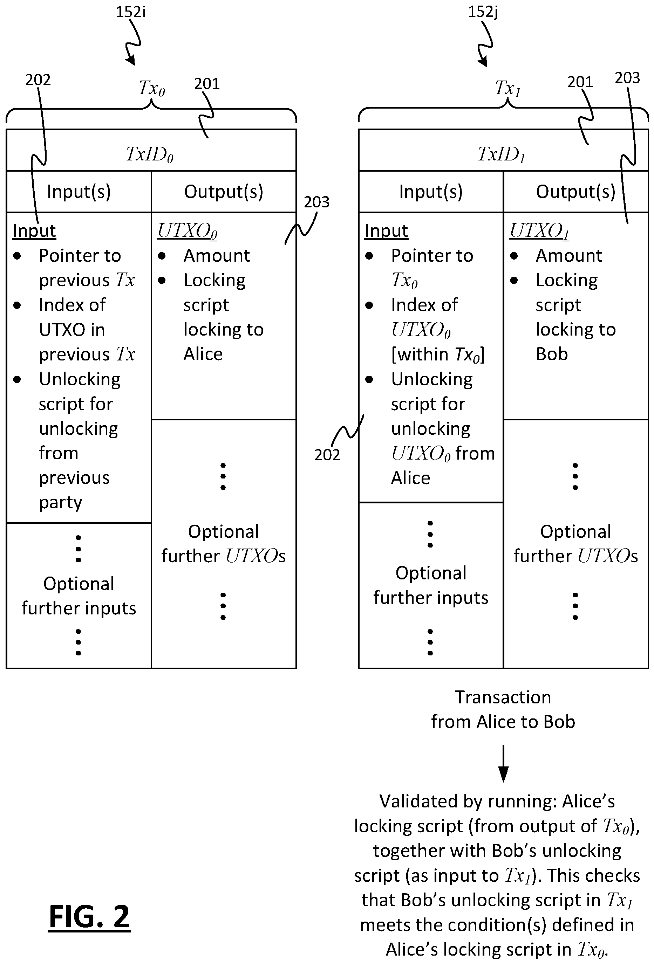

Figure 2 illustrates an example transaction protocol. This is an example of a UTXO-based protocol. A transaction 152 (abbreviated "Tx") is the fundamental data structure of the blockchain 150 (each block 151 containing one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 is a data structure having one or more inputs 202, and one or more outputs 203. Each output 203 may include an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also include a header 201, which may include an indicator of the size of the input field(s) 202 and output field(s) 203. The header 201 may also include an ID of the transaction. In some embodiments, the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ is a particular UTXO, labelled here $UTXO_0$. Each UTXO includes a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). That is, the locking script defines an unlocking condition, typically include a condition that the unlocking script in the input of the subsequent transaction include the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ includes a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ includes a pointer pointing back to $Tx_0$ (e.g. by means of its transaction ID, $TxID_0$, which in some embodiments is the hash of the whole transaction $Tx_0$). The input 202 of $Tx_1$ includes an index identifying $UTXO_0$ within $Tx_0$, to identify it amongst any other possible outputs of $Tx_0$. The input 202 of $Tx_1$ further includes an unlocking script <Sig $P_A$> which has a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This may include running the locking script and unlocking script together to check whether the unlocking script meets the condition defined in the locking script (where this condition may include one or more criteria). In some embodiments this may involve concatenating the two scripts:

$$<\text{Sig } P_A> <P_A> \,\|\, [\text{Checksig } P_A]$$

where "∥" represents a concatenation and "<...>" means place the data on the stack, and "[...]" is a function carried out by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data includes the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically includes hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered set of transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice, a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However, the amount from the UTXO can be split between multiple outputs of the next transaction. For example, the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node that publishes her transaction 104. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. For example, say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that publishes the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence, typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. For example, the data could include a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically includes the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed includes authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may include additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may include any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

### Client Software

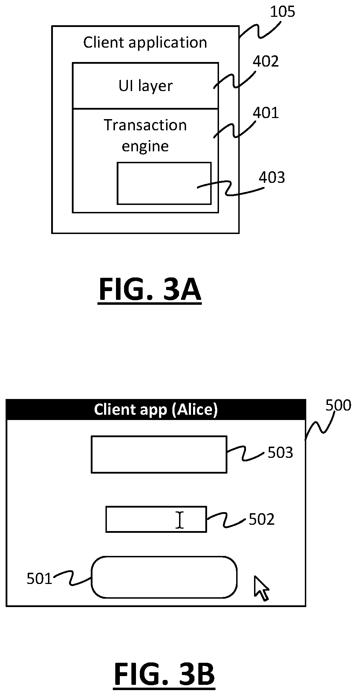

Figure 3A illustrates an example implementation of the client application 105 for implementing embodiments of the presently disclosed scheme. The client application 105 may include a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the processes discussed above.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could include one or more display screens (touch or non-touch screen) for providing a visual output, one or more speakers for providing an audio output, and/or one or more haptic output devices for providing a tactile output, etc. The user input means could include for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note that whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may include one or more UI elements 501, 502, 502 rendered as distinct UI elements via the user output means.

For example, the UI elements may include one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may include one or more data entry fields 502. These data entry fields 502 are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may include one or more information elements 503 output to output information to the user. For example, the information could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3B is only a schematized mock-up and in practice it may include one or more further UI elements, which for conciseness are not illustrated.

### *Node Software*

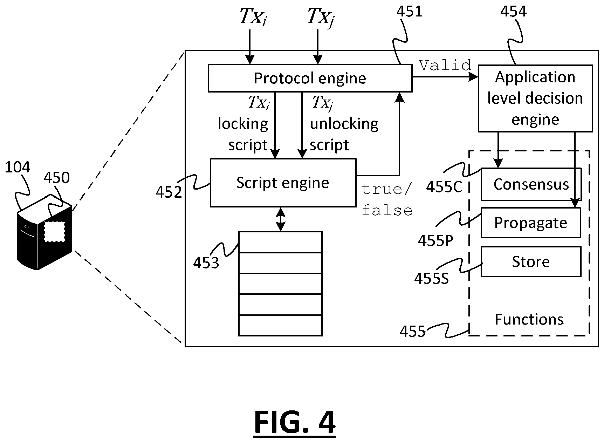

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains, but is not limited to, all three of: a consensus module 455C (for example, proof-of-work), a propagation module 455P and a storage module 455S (for example, a database). The protocol engine 401 is typically configured to recognize the different fields of a transaction 152 and process them in accordance with the node protocol. When a transaction 152j ($Tx_j$) is received having an input pointing to an output (e.g. UTXO) of another, preceding transaction 152i ($Tx_{m-1}$), then the protocol engine 451 identifies the unlocking script in $Tx_j$ and passes it to the script engine 452. The protocol engine 451 also identifies and retrieves $Tx_i$ based on the pointer in the input of $Tx_j$. $Tx_i$ may be published on the blockchain 150, in which case the protocol engine may retrieve $Tx_i$ from a copy of a block 151 of the blockchain 150 stored at the node 104. Alternatively, $Tx_i$ may yet to have been published on the blockchain 150. In that case, the protocol engine 451 may retrieve $Tx_i$ from the ordered set 154 of unpublished transactions maintained by the node 104. Either way, the script engine 451 identifies the locking script in the referenced output of $Tx_i$ and passes this to the script engine 452.

The script engine 452 thus has the locking script of $Tx_i$ and the unlocking script from the corresponding input of $Tx_j$. For example, transactions labelled $Tx_0$ and $Tx_1$ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of $Tx_j$ does not exceed the total amount pointed to by its inputs, and that the pointed-to output of $Tx_i$ has not already been spent by another valid transaction. The protocol engine 451 evaluates the result from the script engine 452 together with the one or more protocol-level conditions, and only if they are all true does it validate the transaction $Tx_j$. The protocol engine 451 outputs an indication of whether the transaction is valid to the application-level decision engine 454. Only on condition that $Tx_j$ is indeed validated, the decision engine 454 may select to control both of the consensus module 455C and the propagation module 455P to perform their respective blockchain-related function in respect of $Tx_j$. This may include the consensus

module 455C adding $Tx_j$ to the node's respective ordered set of transactions 154 for incorporating in a block 151, and the propagation module 455P forwarding $Tx_j$ to another blockchain node 104 in the network 106. Optionally, in embodiments the application-level decision engine 454 may apply one or more additional conditions before triggering either or both of these functions. For example, the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In some embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In some other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

### Large volume transaction handling

As the capacity of the network grows to accommodate larger numbers of transactions, nodes will need to adapt to handling significant flows of transactions. In some possible scenarios, the flow of new transactions may grow to tens of thousands, hundreds of thousands, even millions of transactions per second.

One of the mechanisms for addressing the challenge of large volumes and large blocks is to have nodes pre-propagate their candidate blocks prior to finding a solution. In this manner, once a block solution is found, the successful node need only send the solution details, *e.g.* the coinbase transaction, the Merkle root, the nonce, etc., instead of sending the full ordered list of TxIDs. Other nodes can then validate the solution based on the already-received ordered list of TxIDs.

To address the issue of large constant influx of new transactions, nodes may engage in dynamic transaction validation and block assembly in which the node builds successive arrays of ordered transactions, and the candidate block being mined at that node is made up of the arrays. As new arrays are completed, they are added to the candidate block. Meanwhile, the node propagates its completed arrays to other nodes. When a block solution is found, the node sends the solution details and an ordered list of array identifiers that specify the order of the arrays in the solved block. In this manner, the other nodes can quickly assemble the solved block from the arrays previously received from that node, and then engaged in validating the block solution.

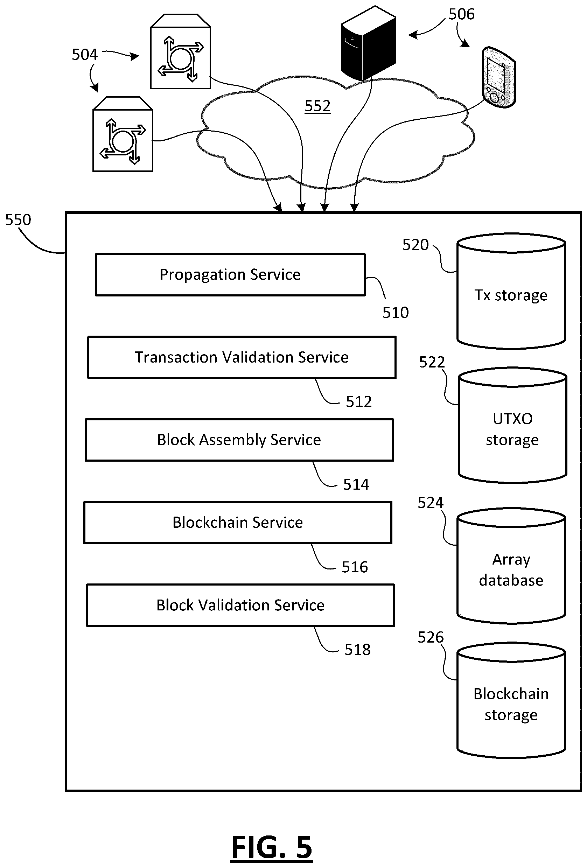

Reference will now be made to Figure 5, which diagrammatically shows a simplified example blockchain node 550 for processing a large volume of blockchain transactions. In this example, the node 550 is shown as a single device; however, it will be appreciated that the node 550 may be implemented using one or a plurality of computing devices. The computing devices include one or more processors, memory, internal communications busses, and external network communication subsystems, among other systems.

The blockchain node 550 is configured for communication over one or more computer networks 552. The computer networks 552 may include a peer-to-peer computer network, such as a blockchain network interconnecting blockchain nodes, such as other blockchain nodes 504. The computer networks 552 may include public and/or private computing networks, including the Internet. In some cases, the computer networks 552 may support multicast communications. The computer networks 552 may enable communications from user devices 506, such as end user computing or edge devices that may generate and send blockchain transactions or queries. The user devices may include mobile devices, point-of-sale devices, merchant computing systems, e-commerce platforms, financial services platforms, payment processing systems, and other such systems or devices.

The blockchain node 550 may implement a number of services, including a propagation service 510, a transaction validation service 512, a block assembly service 514, a blockchain service 516 and a block validation service 518. Some or all of these services may be horizontally scalable.

In addition, the blockchain node 550 may maintain or have access to certain stored data. The data may be stored in database format or in other data structures depending on the implementation. The stored data may include, for example, transaction storage 520, UTXO storage 522, one or more array databases 524, and a blockchain storage 526.

The propagation service 510 manages network communications for the blockchain node 550. It may listen for transactions incoming via a IPv6 multicast network, for example. It may perform some gating on incoming transactions, such as basic validity checks like ensuring the transaction is formatted correctly, has non-zero inputs and outputs, and other such basic validity checks.

The transaction validation service 512 may validate a transaction according to the rules of the applicable blockchain protocol. It may, for example, verify that inputs consumed in the transaction are valid unspent outputs of a confirmed or unconfirmed transaction, e.g. a UTXO. The transaction validation service 512 may verify that a block is valid in part through referencing the UTXO storage 522 to verify that inputs are unspent. Validated transactions are passed to the block assembly service 514.

The transaction validation service 512 or a sub-service may mark any inputs to the transactions as spent in the UTXO storage 522. The validated transaction may be stored in the transaction storage 520.

The block assembly service 514 is responsible for creating new candidate blocks for miners associated with the blockchain node 550. The block assembly service 514 receives a stream or flow of validated transactions and assembles them into arrays of ordered transaction identifiers. As an array is completed, its Merkle root is calculated, it is added to the current candidate block, the Merkle root of the candidate block is updated, and the candidate block header is pushed to the miners. A newly-completed array is announced to other blockchain nodes over the computer networks 552.

The blockchain service 516 manages the block headers and arrays in a block and records block data in the blockchain storage 526. In some cases, the blockchain storage 526 may be a complete copy of the current blockchain. In some cases, the blockchain storage 526 may be metadata, such as block headers and array data including TxIDs, but excluding full transaction data.

In some cases, the array discussed above may be referred to as a sub-tree since its transaction identifiers form a portion of the total consolidated ordered list of transaction identifiers that may be in a candidate block, such that the transaction identifiers from the array may be used to find a part of the Merkle tree for the candidate block, *i.e.* a "sub-tree". Each array has a unique array identifier, or "sub-tree identifier", that is sent with the array when propagated to other blockchain nodes 504 over the blockchain network. The other nodes, having determined that they have seen and validated all transactions in the array may then store the array identifier in memory in association with the array data. Likewise, when the blockchain node 550 receives arrays from other blockchain nodes 504 it determines whether it has received and validated all the transactions listed in the array by transaction identifier and it then validates the Merkle root of the array and stores the array identifier in memory in association with the array data within the array database 524. The arrays are stored in association with an identifier for the node that sent them. That is, the array database 524 may include a set of arrays associated with a particular node identifier unique to the node that created and propagated those arrays.

In the examples below, the block validation service 518 serves to verify the validity of a block announced by one of the other blockchain nodes 504. It listens for arrays communicated by other blockchain nodes 504 and carries out functions to compactly store the array data in a manner that enables fast and efficient validation of a block, if a solution is found. A block announcement from one of the other nodes 504 includes block header data and an ordered list of array identifiers from which the node can determine the block contents, provided it has already received the arrays corresponding to the array identifiers. The block solution may be referred to herein as a newly-solved block.

In order to enable large volume transaction processing, the node 550 must be able to quickly and efficiently handle incoming array data from other nodes, verify its validity, and, when a block solution is announced, quickly and accurately validate the block. To meet these challenges, the block validation service 518 is ideally horizontally scalable and stores the array data in a structure and a manner that enables the node 550 to quickly validate a block once a solution is announced. In one such solution, the node 550 utilizes a transaction graph datastore 528 to map transaction data and interrelationships to enable verification of topological ordering once a solution is found. In another such solution, the node 550 utilizes a set of array transaction databases (not shown) that, for each array, track inputs to the transactions of the array from previous blocks or other arrays, and outputs from transactions of the array that are not consumed within the array.

An overview of the architecture of a node constructed to handle a large volume flow of transactions will now be described.

Some implementations of blockchain networks impose a constraint on block size, such as up to 1 megabyte. In some instances, this measure may have been put in place to prevent spam transactions at a time when the digital currency's use was nascent. This size limit inherently restricts the network to a throughput of approximately 3.3 to 7 transactions per second. As adoption has increased, this constraint has led to bottlenecks in transaction processing, resulting in delays and increased transaction fees, highlighting the need for a scalability solution.

The present application provides a node architecture and methods that address at least some of the challenges of vertical scaling by instead spreading the workload across multiple machines. This horizontal scaling approach, coupled with an unbound block size, enables network capacity to grow with increasing demand through the addition of cluster nodes, allowing for scaling to be truly unbounded.

The described processing system may consistently handle over one million transactions per second. The node has been designed as a collection of services that work together to provide a decentralized, scalable, and secure blockchain network. The node is designed to be modular, allowing for easy integration of new services and features.

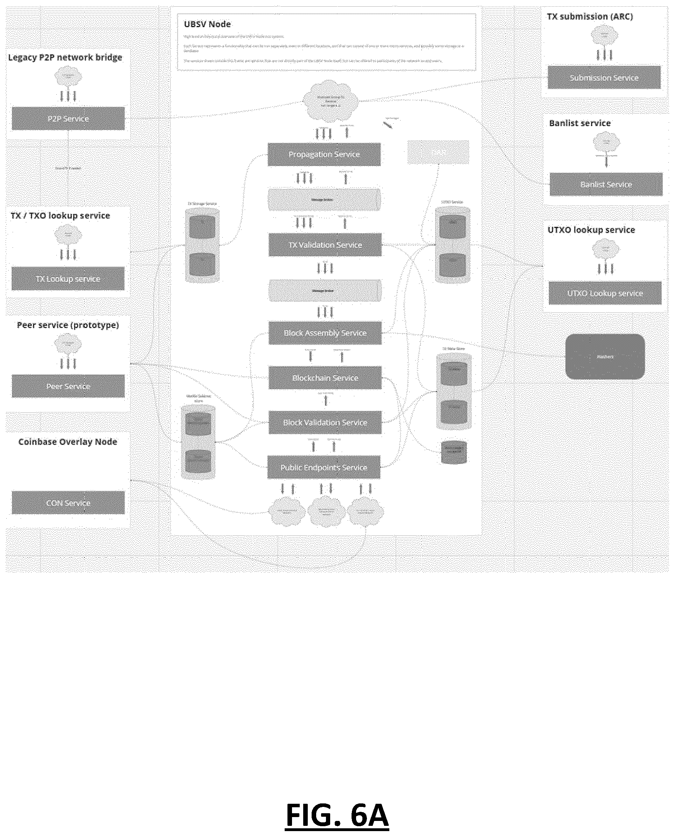

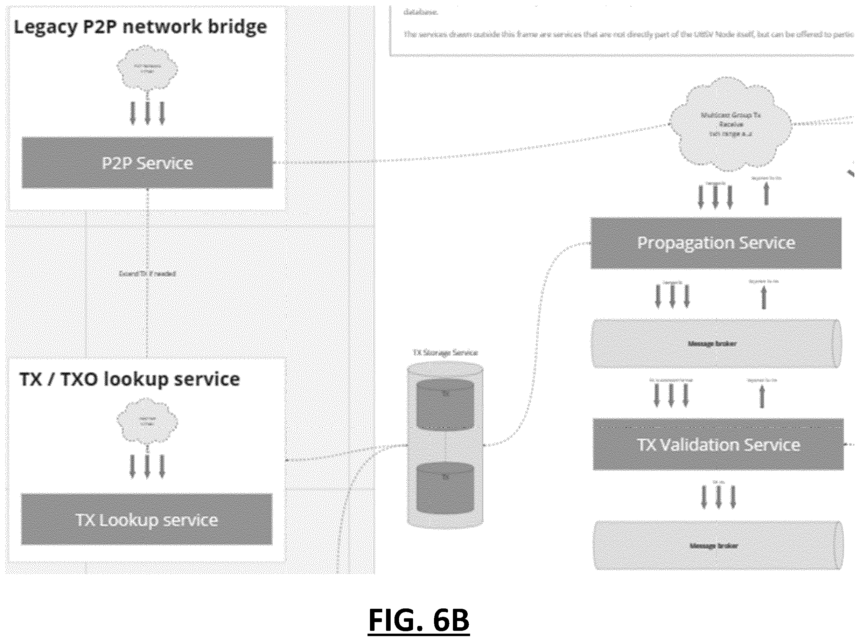

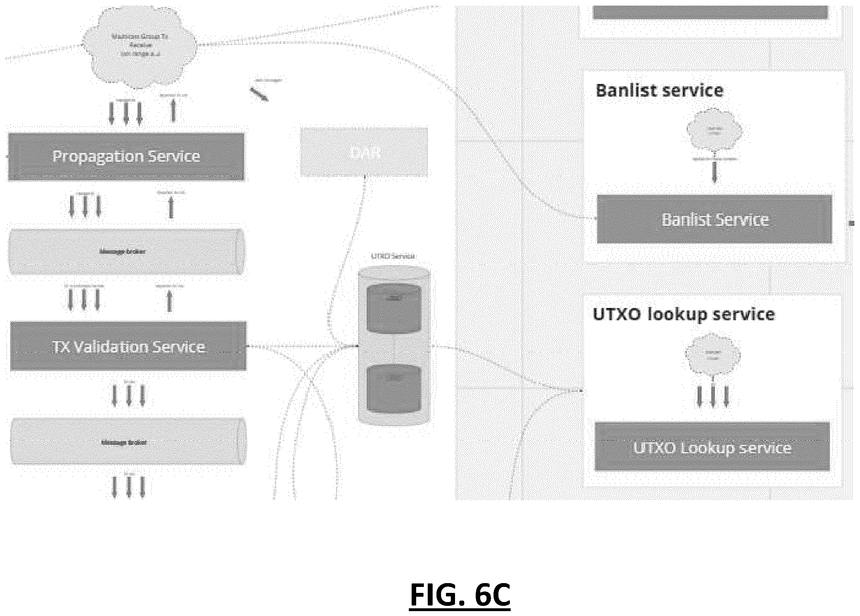

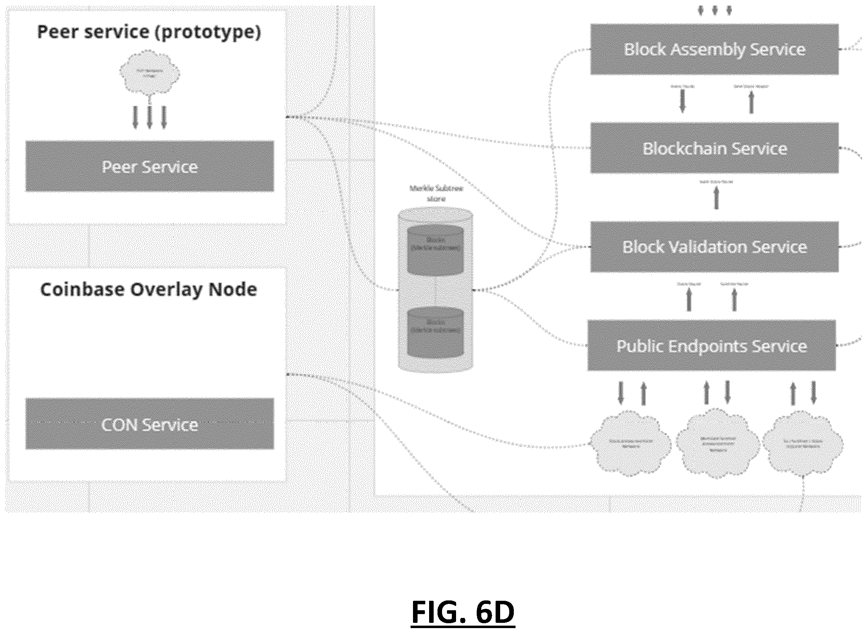

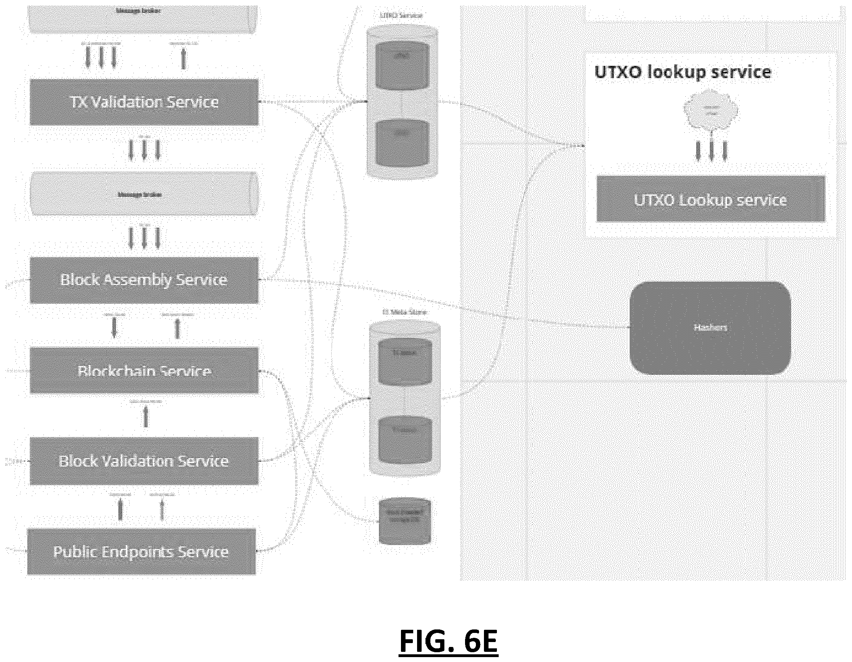

Reference is now made to FIG. 6A, which illustrates an example blockchain node made up of different microservices and showing their interactions. FIG. 6A shows an overall view of the architecture. FIGs. 6B through 6E show enlargements of portions of FIG. 6A for improved readability.

Among the core node services are:

1. Propagation Service: Responsible for receiving transactions (from other nodes) and propagating transactions (to other nodes).

2. TX Validation Service: Checks transactions for correctness and adherence to network rules.

3. Block Assembly Service: Assembles blocks for the blockchain.

4. Blockchain Service: Responsible for managing the block headers and list of subtrees in a block.

5. Block Validation Service: Validates new subtrees and blocks before they are added to the blockchain.

In addition, the node may include various overlay services, such as:

1. Legacy P2P Network Bridge: This service handles the legacy peer-to-peer communications within the blockchain network. As older (legacy) nodes will not be able to directly communicate with the newer nodes, this service acts as a bridge between the two types of nodes.

2. Peer Service: This service handles node discovery, managing connections with peer nodes in the network.

3. Coinbase Overlay Node: This service tracks and stores the Coinbase transactions, which are the first transactions in a block that create new coins and reward miners.

4. TX / TXO Lookup Service: This is used for querying "in scope" transaction and transaction output data.

5. TX Submission (ARC): Manages the submission of transactions to the network on behalf of the propagation service.

6. Banlist Service: Maintains and verifies against a list of banned entities or nodes.

7. UTXO Lookup Service: Retrieves information about unspent transaction outputs, which are essential for validating new transactions.

In addition to the overlay services, the node may include additional services, such as:

1. Message Broker: A middleware that facilitates communication between different services.

2. TX Status Store: Keeps track of the status of transactions within the system.

3. Hashers: Perform the computational work of hashing that is central to the mining process.

In one aspect, the present application provides certain changes to the way data is organized and propagated across the blockchain network, such as between blockchain nodes. In one example, the block size is unbounded, enabling potentially unlimited transactions per block, which removes any restriction on increasing throughput, and may end up reducing transaction fees.

In conventional Bitcoin, the block solution sent to other blockchain nodes contains all transactions (including all transaction data) for each transaction it contains, not just the transaction identifiers. This means that the block size would be very large if many transactions were included. At scale, this is not practical, as the block size would be too large to propagate across the network in a timely manner.

In accordance with an aspect of the present application, transactions may be "extended transactions" that include additional metadata to facilitate processing. They are broadcast on the network to nodes as they are encountered or occur. Extended transactions may include a marker to flag that they are extended transactions. An extended transaction may include additional data such as a "previous TX output" which is the output value in satoshis of a previous input, a "previous TX script length" which is given as a non-negative integer, and/or a "previous TX locking script" which is the script associated with the output that serves as one of the inputs. Further information regarding extended transactions may be found in Bitcoin Improvement Protocol (BIP) 239, of November 9, 2022, the contents of which are hereby incorporated by reference.

### Subtrees

Subtrees act as an intermediate data structure to hold batches of transaction identifiers (including metadata) and a corresponding Merkle root for the subtree. Note that the size of the subtree could be any number of transactions, just as long as it is a power of 2 (16, 32, 64...). In some embodiments, all subtrees in a block have to be the same size. At peak throughput, subtrees may contain millions of transaction identifiers.

Subtrees are broadcast every second (assuming a baseline throughput of 1M transactions per second), making data propagation more continuous rather than batched every 10 minutes. By broadcasting these subtrees at such a high frequency, receiving nodes can validate these batches quickly and continuously, having them "pre-approved" for inclusion in a block. This contrasts with some blockchain systems, where a new block, and hence a new batch of transactions, is broadcast approximately every ten minutes after being confirmed by miners.

Subtrees only include transaction IDs, not the full transaction data, since all nodes already have the transactions, thus reducing the size of the data to propagate. Since all nodes participating in the network are assumed to already have the full transaction data (which they receive and store as transactions are created and spread through the network), it is unnecessary to rebroadcast the full details with every subtree. The subtree then allows nodes to confirm they have all the relevant transactions and to update their state accordingly without having to process vast amounts of data repeatedly.

A solved block message may contain a lists of subtree identifiers, not transactions or transaction identifiers. This is practical for nodes because they have been processing subtrees continuously, allowing for quick validation of blocks. When a block is found, its validation is expedited due to the continuous processing of subtrees. If a node encounters a subtree it is unaware of within a new block, it can request the details from the node that submitted the block.

### Node Workflow

At a high level, an example node may perform the following functions or operations:

1. Transaction Submission: Transactions are submitted to the network via the Submission Service. Blockchain nodes are subscribed to a IPv6 or alternative broadcast service, and transactions are expected to be received by all nodes.

2. Transaction Validation: Transactions are validated by the TX Validation Service. This service checks each received transaction against the network's rules, ensuring they are correctly formed and that their inputs are valid and unspent (verified by the UTXO Lookup Service). Once validated, the status of transactions are updated in the TX Status Store, indicating they have not been included in a block yet and are eligible for inclusion.

3. Subtree Assembly: The Block Assembly Service ingests transactions and organizes them into subtrees. "Subtrees" are a key component of the node, allowing for efficient processing of transactions and blocks. A subtree may contain a million or more transactions. Once a subtree is created, it is broadcast to all other nodes in the network. It is expected that different blockchain nodes on the network will arrive at similar or equal subtree compositions. All nodes should have the generally same transactions in their subtrees, but the grouping and order of the transactions may differ. As they build their subtrees, nodes will broadcast these subtrees to each other.

4. Subtree Validation: The Block Validation Service validates the subtrees it receives. This involves checking the transactions within the subtree against the network's rules and ensuring they are correctly formed and that their inputs are valid and unspent (verified by the UTXO Lookup Service). Once validated, the status of the subtree is updated, marking it as eligible for inclusion. If a subtree is not valid, it is discarded and not included in the block. If a subtree is valid, it is stored for later use in both block validation, and in block assembly to clean up transactions and prepare for the next block template.

5. Block Assembly: The Block Assembly Service compiles block templates containing subtrees. These templates are pre-blocks that the node miner service will use to create a full block. Once a hashing solution has been found, the block is broadcast to all other nodes for validation.

6. Block Validation: Once a node finds a valid hashing solution (a successful proof-of-work), the found block is sent to the Block Validation Service. This service checks the new block against the network's consensus rules. If the block is valid, the node will append it to their version of the blockchain.

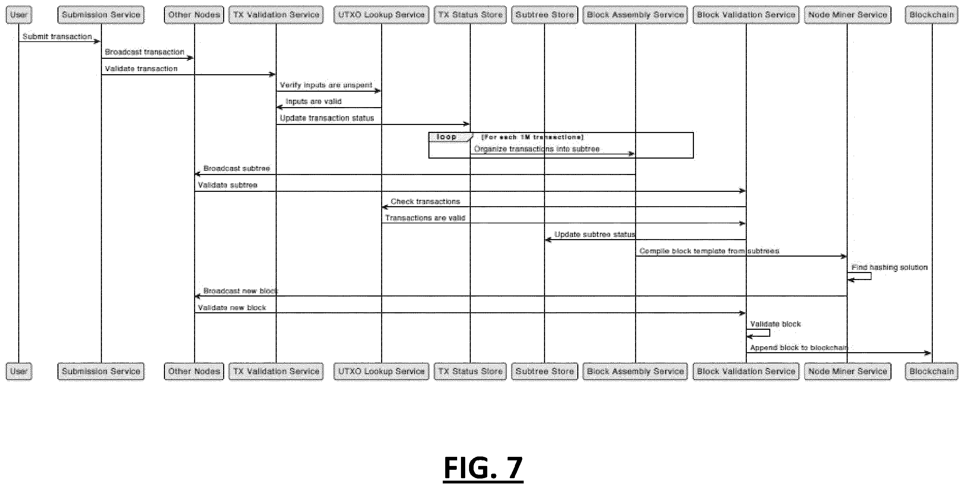

FIG. 7 shows an example sequence diagram that reflects some of the above operations/functions.

As noted above, an example blockchain node in accordance with the present application may be designed as a collection of microservices, each handling specific functionalities. As examples, the node may include the following services:

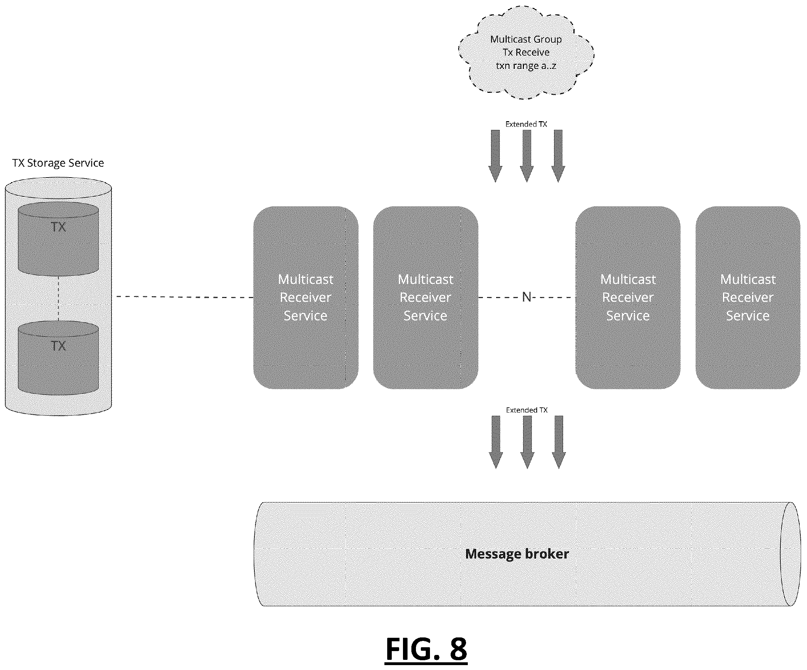

**Transaction Propagation Service.** This service may be responsible for receiving transactions from other nodes and forwarding them to the validator service and for propagating transactions to other nodes. FIG. 8 diagrammatically illustrates example elements of the service, such as:

1. TX Storage Service: This is a datastore that holds all received transactions, either invalid or eligible for inclusion in the next block template.

2. Multicast Receiver Service (Multiple Instances): These services are responsible for listening to transactions that are being broadcasted over the network. These services listen on IPV6 multicast network addresses reserved for transactions. There are multiple instances, each listening to a set of fixed IPV6 addresses, offering a horizontally scalable design that allows for handling more transactions by increasing the number of service instances. There can be an arbitrary number of these multicast receiver services operating, which is part of how the system achieves scalability.

3. Message Broker: This is the communication layer that the multicast receiver services use to forward the extended transactions to the Validation service. The use of a message broker introduces decoupling between the services, allowing for more scalable and maintainable systems.

4. Sanity Checks: Before sending transactions on to the Validation Service, the Multicast Receiver Services perform basic validations to ensure transactions are correct and adhere to network protocols.

Note that, while the main network might use multicast for propagation, the test network simplifies operations by using gRPC, a high-performance, open-source universal RPC framework, for direct communication between the Propagation and Validation Services, bypassing the need for IPV6 broadcasting.

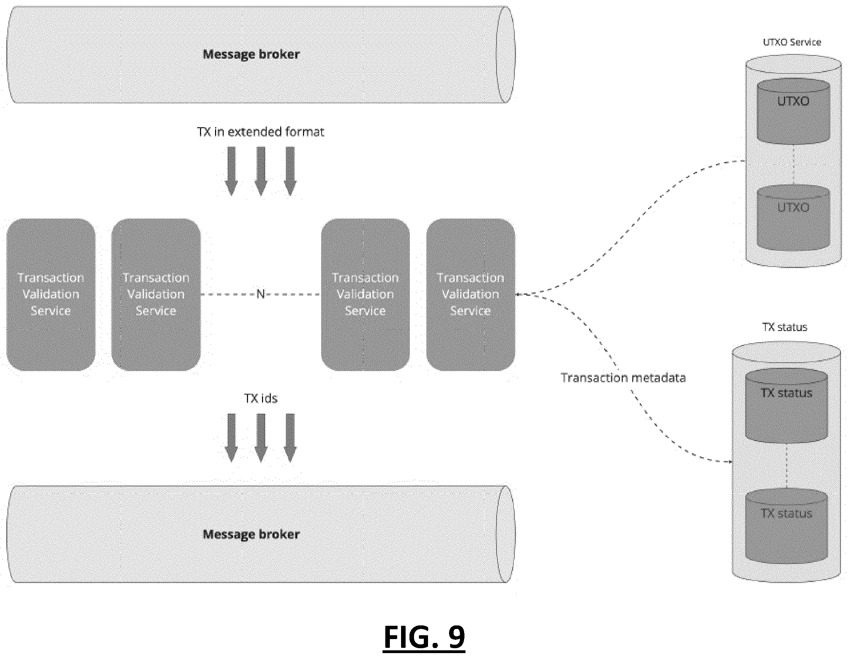

**Transaction Validation Service.** The Transaction Validation Service is responsible for validating a transaction according to the rules of the network and then sending the approved transaction identifiers to block assembly. The transactions that have passed the TX Validation Service are immediately marked as spent in the UTXO store. After the UTXOs have been marked as spent, the transaction metadata is stored in the TX Status store and sent onwards to the Block Assembly Service via a Message Broker. FIG. 9 diagrammatically illustrates example elements of the service, such as:

1. Message Broker: Communication layers that facilitate message passing between the Propagation Service and the Validation Service, and between the Validation Service and the Block Assembly.

2. Transaction Validation Service (Multiple Instances): Multiple instances of the service can be initiated, allowing to validate transactions in parallel, which will help to increase throughput and scalability.

3. TX ids: After validation, transaction identifiers (ids) are passed to the Block Assembly service.

4. UTXO Service: Datastore of UTXOs (the outputs from transactions that have not been spent and can be used as inputs in new transactions).

5. TX Status: Datastore managing the statuses of transactions. If validated and not mined, they will be eligible for inclusion in a block.

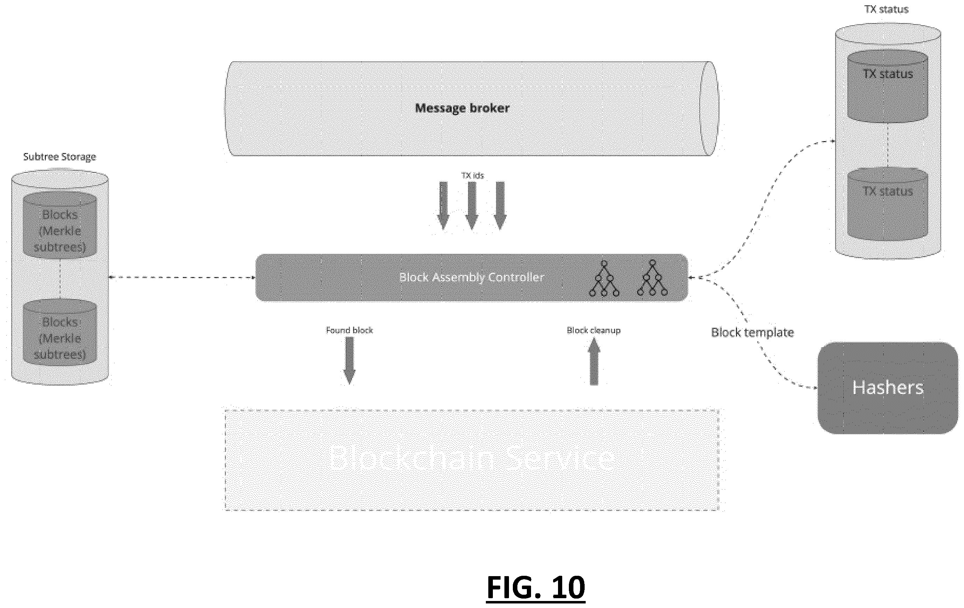

**Block Assembly Service.** The service is responsible for creating subtree and block templates for Miner Services to hash against. The Block Assembly will broadcast any newly created subtrees to the network. The Block Assembly Service performs both Subtree Assembly and Block Assembly. The Subtree Assembly Service ingests transactions and organizes them into subtrees. Once a subtree is created is it broadcast to the other nodes in the network. The Block Assembly Service compiles block templates consisting of subtrees. Once a hash solution is found, the solved block template is broadcast to the other nodes for validation. FIG. 10 diagrammatically illustrates example elements of the service, such as:

1. Subtree Storage: This stores blocks and their corresponding Merkle subtrees.

2. Message Broker: This is a middleware that allows for the decoupling of different parts of the blockchain system, facilitating asynchronous communication. Transaction IDs (TxIDs) are sent from the Message Broker to the Block Assembly Controller.

3. Block Assembly Controller: This component orchestrates the process of creating new subtrees and new blocks. It receives transaction IDs from the Message Broker, performs necessary checks, and assembles subtrees and blocks.

4. TX Status Database: This stores the status of transactions. Before a transaction ID is included in a subtree or block template, the Block Assembly Service checks this database to ensure that the transaction has not been previously included in another subtree / block (*i.e.,* it is not yet seen in a block).

5. Subtrees: Completed subtrees are announced on the network, so other nodes can incorporate them into their blocks.

6. Hashers / Miners: After the block template (including all eligible subtrees of transactions) is prepared, it is sent to entities called Miners, which are responsible for performing the computational work (hashing) needed to find a valid block.

7. Announcement: All new subtrees that are completed are announced on the IPV6 multicast block subtree network address(es).

**Miner/Hasher.** The Miner Service is responsible for mining blocks. It solves a hashing proof of work for the current set of transactions and subtrees on behalf of a Block Assembly Service. Upon successful mining of a block, the miner is rewarded with a block reward (newly minted coins) and the transaction fees from the transactions included in the block. It will be appreciated that if two miners solve a block at roughly the same time, there could be a temporary fork in the blockchain. The network resolves this by choosing the chain with the most accumulated work (typically the longest chain). Miners are configured to handle orphaned blocks and transactions. That is, if another chain becomes longer, transactions from the orphaned blocks are tracked to be mined in future blocks.

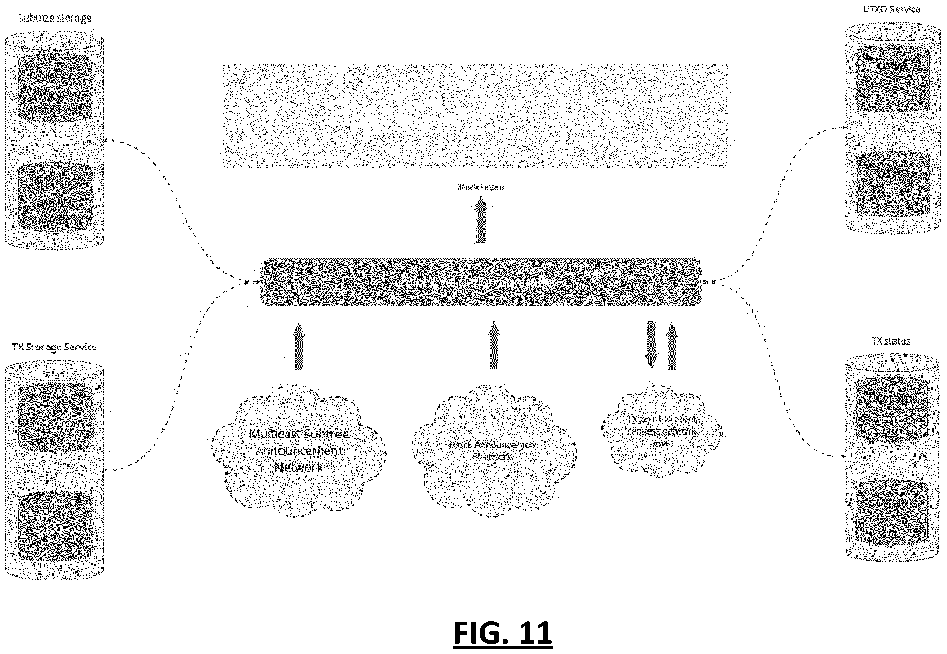

**Subtree and Block Validator.** The Validator Service is designed to ensure the integrity and consistency of the blockchain network. It has two main responsibilities: Subtree Validation and Block Validation. In addition, the Validator service plays a key role in maintaining the Unspent Transaction Outputs (UTXO) set. FIG. 11 diagrammatically illustrates example elements of the service, such as:

1. Block Validation Controller: Acts as the orchestrator for the block validation process. It reacts to new subtrees or blocks being found by either this node or other nodes in the network. The service is tasked with validating the individual subtrees of a block, and later on validating the block that aggregates said subtrees.

2. Subtree Storage: Holds the Merkle subtrees, which are partial hashes of the complete block. These are crucial for quickly validating new blocks found by competing miners. These are discarded once they are no longer required (i.e., after a new block is found and the subtrees are no longer needed).

3. TX Storage Service: Maintains a record of all created transactions, including those that have not yet been confirmed and added to a block on the blockchain.

4. UTXO Service: Manages the list of all unspent transaction outputs, which represent potential inputs for new transactions.

5. TX Status: Keeps track of the validation status of individual transactions.

6. Multicast Subtree Announcement Network: This network's role is to broadcast Merkle subtree announcements to the network. Multicast allows for efficient distribution of information to nodes interested in receiving these announcements.

7. TX Point to Point Request Network (IPv6): This is utilized to request the full transaction data for transactions that are not "blessed."

When the Validator Service is being used to validate subtrees, it may receive subtrees frequently. In some cases, as frequently as every second or more. The Validator service checks their integrity. This may include verifying that each transaction identifier listed in the subtree is valid and that the corresponding transactions exist and are themselves valid. If a transaction is missing, the node requests it from the mining node that sent the subtree. If the transaction is invalid, the subtree may be rejected. Part of the validation process may include ensuring that the transactions within a subtree correctly reference and spend UTXOs.

By validating subtrees in real time, the system can efficiently manage a high throughput of transactions, reducing bottlenecks that would otherwise arise during block validation.

If a subtree includes a transaction identifier for a transaction that has not previously been validated or "blessed" by the node, then the Validator service retrieves and validates that transaction. If it is valid, it is also added to the block assembly process. If it is invalid due ot issues like missing inputs, for example, the transaction and its subtree are rejected.

When performing block validation, the Validator service need not validate all the individual transactions in a solved block, since it has already done the work of validating all the previously-received subtrees. Instead, it can quickly validate the block by checking the top part of the Merkle tree formed from the Merkle roots of the subtrees. This greatly reduces the time and complexity of block validation after a solved block has been announced.

The Merkle Subtree Store is a dedicated storage component within the Validator service that holds the received subtrees. It retains the subtrees until a new block is found and integrated into the blockchain, after which the subtrees are no longer needed and can be discarded. This storage ensures that the subtrees are readily available for block validation and helps in maintaining the continuity of the validation process.

The validation process is constant and iterative, designed to maintain the blockchain's integrity and support high transaction throughput. Once the Validator service validates a block, it propagates this block to the Blockchain service, ensuring that the blockchain remains up-to-date and consistent across all nodes.

**Blockchain Service.** This service is responsible for managing block updates and adding them to the blockchain maintained by the node. The blocks can be received from other nodes or mined by the node itself. Blocks mined by the node are broadcast to other nodes via the Blockchain Service.

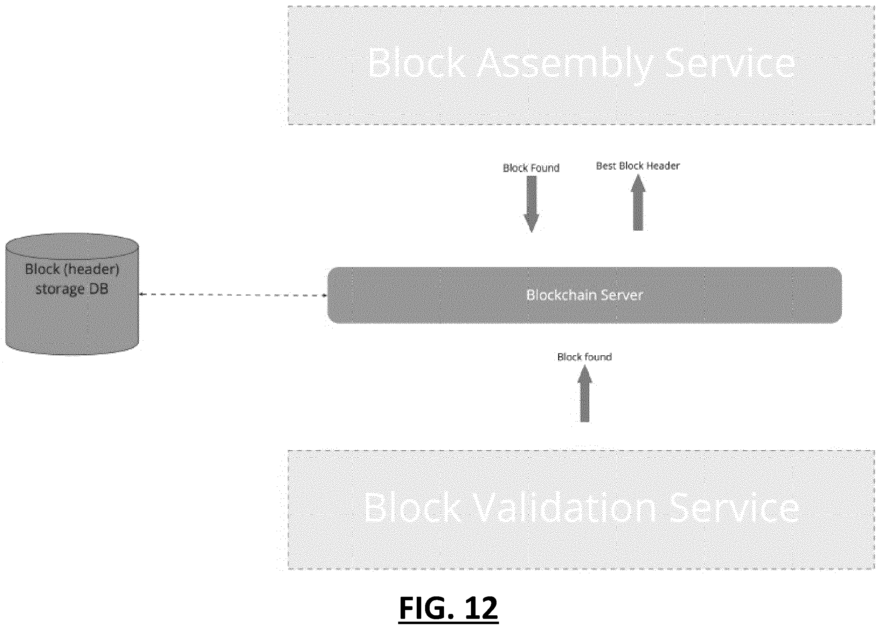

The Blockchain service manages block headers and lists of subtrees in each block. All blocks are recorded in the blockchain databases, including orphaned blocks. Other services can request and store blocks with the service, for purposes like analyzing blockchain data or validating the chain's integrity. The service also provides information be the blockchain's current state, such as the best block header (the header of the most recently accepted block) and the current difficulty setting. FIG. 12 diagrammatically illustrates example elements of the service, such as:

1. Block (header) storage DB: This is a database that stores block headers. In blockchain systems, a block header is part of a block that includes metadata such as the previous block's hash, the timestamp, the nonce used for mining, and the Merkle tree root.

2. Blockchain Server: It acts as the central node that interfaces with the block storage database. It is responsible for processing new blocks (Block Found) and identifying the best block header to be used for further operations like mining or appending to the chain.

3. Block Assembly Service: This service takes transactions that are waiting to be included in a block and assembles them into new subtrees and blocks. Once a new block is created (Block Found), it sends this block to the blockchain server.

4. Block Validation Service: This component is responsible for validating new blocks. It checks if a block complies with the network's consensus rules. After the blockchain server processes a block (Block Found), it will interact with this service to ensure that the block is valid before finalizing it in the blockchain.

The system is designed to maintain the blockchain's integrity by ensuring that all blocks are properly assembled, validated, and stored. It enables other services and participants in the network to interact with the blockchain, request data, and understand the current state of the network for further actions like mining.

**Asset Service.** The Asset Service serves acts as an interface ("Front" or "Facade") to various data stores. It deals with several key data elements, including transactions (TXs), Subtrees, Blocks and Block Headers, UTXOs, and Metadata for Transactions (TXMeta). The service uses both HTTP and gRPC as communication protocols. The service is designed to communicate with other nodes and external clients across the network. The various microservices write directly to the data stores, but the Asset service fronts them as a common interface.

**Coinbase Service.** The Coinbase Service is designed to monitor the blockchain for new coinbase transactions, record them, track their maturity, and manage the spendability of the rewards miners earn. The "coinbase transaction" is the first transaction in the first subtree of a block and is created by the Block Assembly. This transaction is unique in that it creates new coins from nothing as a reward for the miner's work in processing transactions and securing the network.

The Coinbase Overlay Node (CON) is a specialised service utilized by miners. Its primary function is to monitor all blocks being mined, ensuring accurate tracking of the blocks that have been mined along with their Unspent Transaction Outputs (UTXOs). This service actively listens for block header notifications, while maintaining a database of all blocks, whether orphaned or not. Upon the announcement of a new block, the service requests the block in the compact subtree format. This format includes the coinbase transaction, which facilitates the processing of any UTXOs linked to that miner.

When a miner intends to spend one of their coins, they need to retrieve the corresponding UTXO from the CON service. Subsequently, they can generate a valid transaction and transmit this through the CON service. This action labels the UTXO as spent.

In essence, the CON service operates as a straightforward Simplified Payment Verification (SPV) overlay node, custom-built to cater to the requirements of miners.

**Bootstrap Service.** The Bootstrap Service helps new nodes find peers in a UBSV network. It allows nodes to register themselves and be notified about other nodes' presence, serving as a discovery service.

The service manages a set of subscribers and broadcast notifications and keep-alives to them, to keep them updated about network participants.

The current version uses Google's RPC framework for setting up the server and handling stream-based communication.

**P2P Legacy Service.** The P2P service is responsible for managing communications between legacy nodes and the presently-described nodes, effectively translating between the old nodes and the new nodes. This makes possible to run legacy and new nodes side by side, allowing for a gradual rollout of the present architecture and processes.

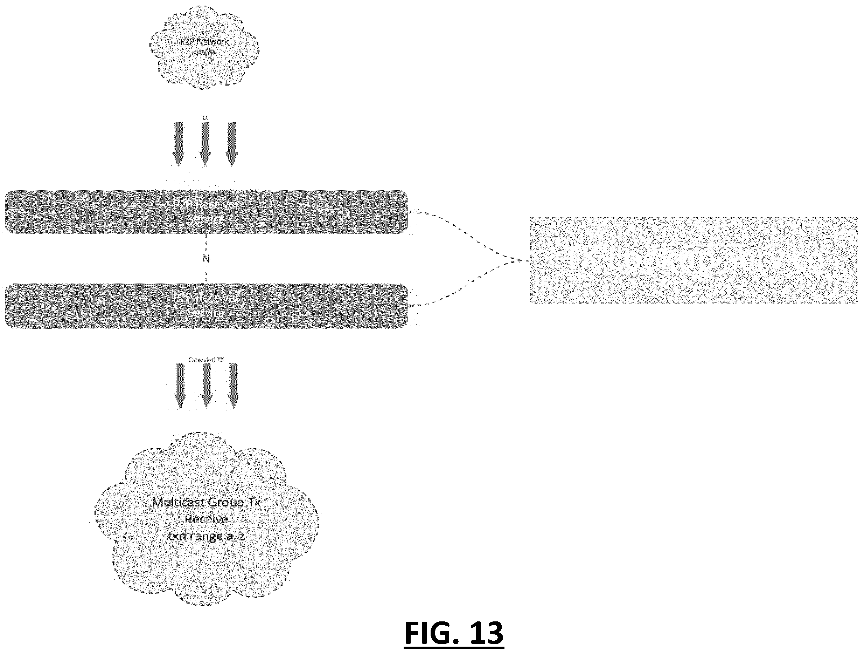

This legacy P2P network is to be phased out as transaction volumes increase, forcing an eventual migration towards a more scalable and feature-rich system. FIG. 13 diagrammatically illustrates example elements of the service, such as:

1. P2P Network (IPv4): This refers to the original Bitcoin peer-to-peer network using the IPv4 internet protocol.

2. P2P Receiver Service: These are the services (1 or more) that receive and send transactions from / to the P2P network.

3. TX Lookup service: This service is responsible for looking up previously stored transaction information. It is used to enrich transactions with additional information before they are broadcast to the network.

4. Multicast Group Tx Receive: This indicates a multicast setup where transactions are broadcast to multiple nodes simultaneously. This is efficient for disseminating information quickly to many nodes in the network.

**UTXO Store.** The UTXO Store service is responsible for tracking spendable UTXOs. These are UTXOs that can be used as inputs in new transactions. The UTXO Store service is primarily used by the Validator service to retrieve UTXOs when validating transactions. The main purpose of this service is to provide a quick lookup service on behalf of other microservices (such as the Validator service).

**Transaction Meta Store.** The Transaction Meta Store service is responsible for storing and retrieving transaction metadata. This is used by many services, including the Validator and Block Assembly services, to retrieve transaction metadata when validating transactions. The Transaction Meta Store service is also used by the Block Assembly service to retrieve transaction metadata when assembling blocks.

The metadata in scope in this service refers to extra fields of interest during transaction-related processing.

| Field | Description |
|---|---|
| Tx | The actual transaction data |
| Fee | The fee associated with the transaction |
| SizeInBytes | The size of the transaction in bytes |
| FirstSeen | Timestamp of when the transaction was first seen |
| ParentTxHashes | List of hashes of the transaction's parent transactions |

**Banlist Service.** The presently-described blockchain network is an open public system that anyone can use. While most participants act in good faith, the system needs to be protected from potential rogue or malicious actors. If a node is breaching the network consensus rules (a 'rogue' node), it may be banned.

For example, any node trying to introduce a double spend will be banned. Equally, not pre-announcing a significant % of the subtrees before the block is found, or not broadcasting the block after it is found, will play against the consensus rules and will get a node banned. Once a node is banned, any transaction, subtree or block coming from that node will be rejected.

Many of the above-described methods may be implemented using one or more computing devices each having one or more processing units, memory, and communications subsystems. Suitable software stored in memory and executable by the one or more processing units may configure the processing units to carry out the described functions or operations. In some cases, a microservices architecture may be used to implement some or all of the methods. While the operations described above are set out in a linear format, it will be appreciated that some implementations may at least partly parallelize some of the operations and/or carry them out in a different order without materially impacting operation of the methods.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A computing system for processing blockchain transactions, comprising:

   one or more processing units; and
   memory storing processor executable instructions that, when executed by the one or more processing units, cause the one or more processing units to implement:

      a propagation service to receive and propagate blockchain transactions over a blockchain network;
      a transaction validation service to receive transactions from the propagation service and to verify that received transactions are compliant with blockchain protocol rules;
      a block assembly service to create a block template for mining by the computing system, including creating one or more subtrees of validated transactions;
      one or more miners to search for a proof of work with regard to the block template;
      a validator service to receive and validate incoming subtrees from other blockchain nodes on the blockchain network and to, following receipt of a block solution, verify validity of the new block based on previously validated subtrees; and
      a blockchain service to manage block headers and lists of subtrees in a block.

2. The computing system of claim 1, further comprising data storage devices and wherein the instructions, when executed by the one or more processing units, further cause the one or more processing units to implement an asset service to act as an interface between microservices and data elements stored in the data storage devices.

3. The computing system of claim 1, wherein the instructions, when executed by the one or more processing units, further cause the one or more processing units to implement a coinbase service to monitor the blockchain for new coinbase transactions, to record them, and to track their maturity.

4. The computing system of claim 1, further comprising a data storage device, and wherein the instructions, when executed by the one or more processing units, further cause the one or more processing units to implement a UTXO store using the data storage device, wherein the UTXO store is to track unspent transaction outputs and to respond to requests for unspent transaction output information from the transaction validation service and/or the validator service.

5. The computing system of claim 1, further comprising a data storage device and wherein the instructions, when executed by the one or more processing units, further cause the one or more processing units to implement a transaction meta store using the data storage device, wherein transaction meta store is to store transaction data together with transaction metadata that includes at least a list of hashes of a transactions parent transactions.

6. The computing system of claim 1, wherein the instructions, when executed by the one or more processing units, further cause the one or more processing units to implement a ban list service, wherein the ban list service is to track node identifiers of nodes banned from operating on the blockchain network due to a violation of a network protocol rule.

7. A method of processing blockchain transactions by a node, the method comprising:

sending and receiving blockchain transactions using a multicast broadcast service over a blockchain network;
validating received blockchain transactions based on blockchain network protocol rules;
assembling one or more subtrees from validated transactions and, as they are assembled,

adding the one or more subtrees to a block template for mining by one or more mining units, and
transmitting the one or more subtrees to other nodes on the blockchain network;

while mining is ongoing, receiving external subtrees from the other nodes on the blockchain network and validating and storing the external subtrees; and
receiving a block solution from one of the other nodes and validating, using validated external subtrees, the block solution and, once validated, appending a solved block to the blockchain.

**FIG. 1**

152i

202    $Tx_0$    201

$TxID_0$

| Input(s) | Output(s) |
|---|---|
| **Input** • Pointer to previous $Tx$ • Index of UTXO in previous $Tx$ • Unlocking script for unlocking from previous party | $UTXO_0$ • Amount • Locking script locking to Alice |
| Optional further inputs ⋮ | Optional further UTXOs ⋮ |

203

152j

$Tx_1$    201    203

$TxID_1$

| Input(s) | Output(s) |
|---|---|
| **Input** • Pointer to $Tx_0$ • Index of $UTXO_0$ [within $Tx_0$] • Unlocking script for unlocking $UTXO_0$ from Alice | $UTXO_1$ • Amount • Locking script locking to Bob |
| Optional further inputs ⋮ | Optional further UTXOs ⋮ |

202

Transaction
from Alice to Bob

↓

Validated by running: Alice's locking script (from output of $Tx_0$), together with Bob's unlocking script (as input to $Tx_1$). This checks that Bob's unlocking script in $Tx_1$ meets the condition(s) defined in Alice's locking script in $Tx_0$.

**FIG. 2**

**FIG. 3A**

**FIG. 3B**

## FIG. 4

**FIG. 5**

# FIG. 6A

EP 4 586 547 A1

**FIG. 6B**

**FIG. 6C**

**FIG. 6D**

EP 4 586 547 A1

**FIG. 6E**

**FIG. 7**

Multicast Group
Tx Receive
txn range a..z

Extended TX

Multicast Receiver Service

Multicast Receiver Service

N

Multicast Receiver Service

Multicast Receiver Service

TX Storage Service

TX

TX

Extended TX

Message broker

**FIG.8**

**FIG. 9**

EP 4 586 547 A1

**FIG. 10**

EP 4 586 547 A1

**FIG. 11**

**FIG. 12**

**FIG. 13**

## EUROPEAN SEARCH REPORT

**Application Number**

EP 24 15 1474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/073066 A1 (NCHAIN LICENSING AG [CH]) 4 May 2023 (2023-05-04) | 1,3-5,7 | INV.<br>H04L9/32 |
| Y | * page 28, line 20 - page 29, line 9 *<br>* page 29, line 25 - line 26 *<br>* page 40, line 1 - line 13 *<br>* page 43, line 27 - page 44, line 9 *<br>* page 44, line 1 - line 9 *<br>* page 45, line 1 - line 27 *<br>* page 46, line 5 - page 47, line 30 *<br>* page 49, line 14 - line 30 *<br>* page 52, line 20 - line 30 *<br>* page 53, line 17 - page 54, line 7 *<br>* page 55, line 1 - line 2 *<br>* page 55, line 14 - line 28 * | 2,6 | H04L9/00 |
| X | US 2021/281397 A1 (CARVER DAVID C [US] ET AL) 9 September 2021 (2021-09-09) | 1,3-5,7 | |
| Y | * paragraphs [0006], [0032], [0033], [0041] - [0044], [0051], [0059], [0063], [0069] - [0070], [0078], [0098] - [0102] * | 2,6 | |
| Y | US 11 811 955 B1 (HURWITZ NOAM [US] ET AL) 7 November 2023 (2023-11-07)<br>* column 5, line 15 - line 26 * | 6 | **TECHNICAL FIELDS SEARCHED (IPC)**<br><br>H04L |
| Y | WO 2020/089567 A1 (CS SOLUTIONS TECH LIMITED [GB]) 7 May 2020 (2020-05-07)<br>* page 19, line 2 - line 12 * | 6 | |
| Y | US 2020/313887 A1 (YIN SI [US]) 1 October 2020 (2020-10-01)<br>* paragraphs [0007] - [0017] * | 2 | |

The present search report has been drawn up for all claims

| Place of search | Date of completion of the search | Examiner |
|---|---|---|
| Munich | 21 June 2024 | Veillas, Erik |

EPO FORM 1503 03.82 (P04C01)

## ANNEX TO THE EUROPEAN SEARCH REPORT
## ON EUROPEAN PATENT APPLICATION NO.

EP 24 15 1474

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | | Publication date | Patent family member(s) | | Publication date |
|---|---|---|---|---|---|
| WO 2023073066 | A1 | 04-05-2023 | WO | 2023072965 A1 | 04-05-2023 |
| | | | WO | 2023073066 A1 | 04-05-2023 |
| | | | WO | 2023073103 A1 | 04-05-2023 |
| | | | WO | 2023073105 A1 | 04-05-2023 |
| US 2021281397 | A1 | 09-09-2021 | EP | 3732865 A1 | 04-11-2020 |
| | | | JP | 2021508876 A | 11-03-2021 |
| | | | US | 2019199515 A1 | 27-06-2019 |
| | | | US | 2021281397 A1 | 09-09-2021 |
| | | | WO | 2019133577 A1 | 04-07-2019 |
| US 11811955 | B1 | 07-11-2023 | NONE | | |
| WO 2020089567 | A1 | 07-05-2020 | NONE | | |
| US 2020313887 | A1 | 01-10-2020 | NONE | | |

EPO FORM P0459

For more details about this annex : see Official Journal of the European Patent Office, No. 12/82